(19) Europäisches Patentamt
European Patent Office
Office européen des brevets

(11) **EP 1 933 273 B1**

(12) **EUROPEAN PATENT SPECIFICATION**

(45) Date of publication and mention
of the grant of the patent:
**16.12.2009 Bulletin 2009/51**

(51) Int Cl.:
*G06T 5/00* (2006.01)

(21) Application number: **07117937.8**

(22) Date of filing: **05.10.2007**

(54) **Generating a contrast enhanced image using multiscale analysis**

Erzeugung eines kontrastverstärkten Bildes mittels Multiskalenanalyse

Génération d'une image améliorée à contrast en utilisant une analyse multi-échelles

(84) Designated Contracting States:
**BE DE FR GB NL**

(30) Priority: **11.12.2006 EP 06125766**

(43) Date of publication of application:
**18.06.2008 Bulletin 2008/25**

(73) Proprietor: **Agfa HealthCare NV**
**2640 Mortsel (BE)**

(72) Inventors:
• **Bertens, Tom**
**2640 Mortsel (BE)**
• **Vuylsteke, Pieter**
**2640 Mortsel (BE)**

(56) References cited:
**US-B1- 6 731 790    US-B1- 6 788 826**

• **JIAN LU ET AL: "Contrast enhancement via multiscale gradient transformation"** PROCEEDINGS OF THE INTERNATIONAL CONFERENCE ON IMAGE PROCESSING (ICIP) AUSTIN, NOV. 13 - 16, 1994, LOS ALAMITOS, IEEE COMP. SOC. PRESS, US, vol. VOL. 3 CONF. 1, 13 November 1994 (1994-11-13), pages 482-486, XP010146217 ISBN: 0-8186-6952-7
• **VUYLSTEKE P ET AL: "Image Processing in Computed Radiography"** COMPUTERIZED TOMOGRAPHY FOR INDUSTRIAL APPLICATIONS AND IMAGE PROCESSING IN RADIOLOGY, 15 March 1999 (1999-03-15), pages 87-101, XP002313672

EP 1 933 273 B1

**Description**

The present invention relates to a method for enhancing the contrast of an image that is represented by a digital signal.

BACKGROUND OF THE INVENTION

Commonly images represented by a digital signal such as medical images are subjected to image processing during or prior to displaying or hard copy recording.

The conversion of grey value pixels into values suitable for reproduction or displaying may comprise a multi-scale image processing method (also called multi-resolution image processing method) by means of which the contrast of the image is enhanced.

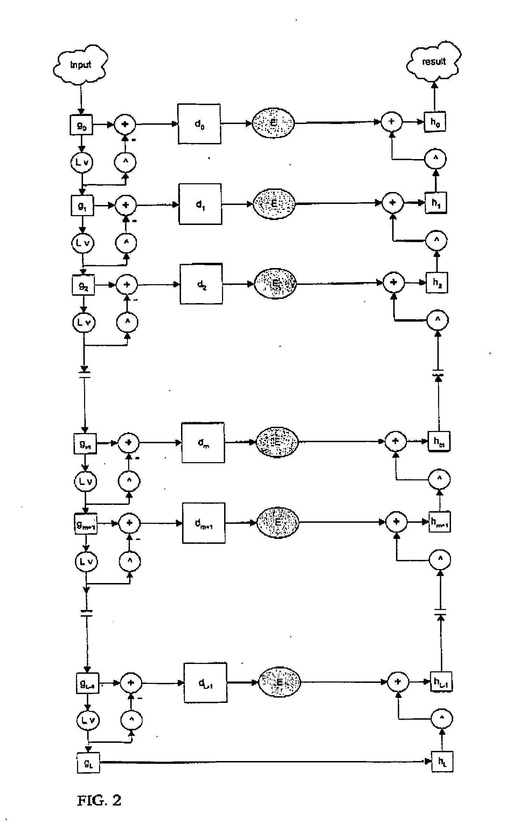

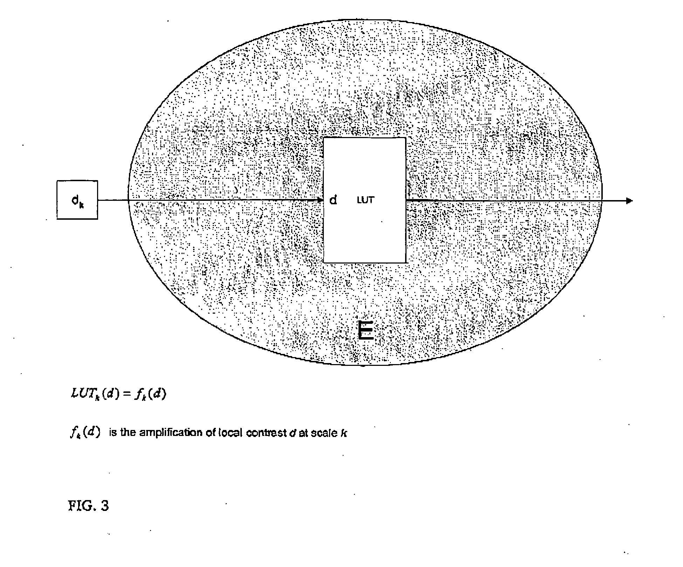

According to such a multi-scale image processing method an image, represented by an array of pixel values, is processed by applying the following steps. First the original image is decomposed into a sequence of detail images at multiple scales and occasionally a residual image. Next, the pixel values of the detail images are modified by applying to these pixel values at least one conversion. Finally, a processed image is computed by applying a reconstruction algorithm to the residual image and the modified detail images. Such a method is illustrated in figures 2 and 3.

There are limits for the behavior of the conversion functions. Grey value transitions in the image can be distorted to an extent that the appearance becomes unnatural if the conversion functions are excessively non-linear. The distortions are more pronounced in the vicinity of significant grey level transitions, which may result in overshoots at step edges and loss of homogeneity in regions of low variance facing strong step edges. The risk of creating artifacts becomes more significant for CT images since they have sharper grey level transitions, e.g. at the interface of soft tissue and contrast media. One has to be careful using the multi-scale techniques on CT images.

In US 6 731 790 B1 a method is described in which artefacts are corrected in an image that is represented by a digital signal. The corrected artifacts originate from any kind of non-linear modification of the components of a multi-scale image representation.
A gradient representation of the original image is generated and modified. A modification step is applied to gradient images.
A reconstruction process is applied to the modified gradient representation.

US 6 788 826 discloses a method of decomposing a digital signal representation of an image into a multi-scale representation, translation images computed of at least one approximation image are non-linearly modified. The patent further discloses applying a reconstruction algorithm which is the inverse of the decomposition into a multi-scale representation.

It is an object of the present invention to provide a method for enhancing the contrast of an image that is represented by a digital signal that overcomes the prior art inconveniences.

More specifically it is an object of the present invention to provide a new multi-scale contrast enhancement algorithm which results in a contrast enhanced image while preserving the shape of the edge transitions.

SUMMARY OF THE INVENTION

The above-mentioned aspects are realized by a method, computer program product, and computer readable medium as defined in the appending claims which define the invention.

Specific and preferred embodiments of this invention are set out in the dependent claims.

A translation difference image according to the present invnetion at a specific scale may be computed out of an approximation image at the same scale or alternatively all translation image smay be computed out of the original image, or still alternatively a translation image at a scale k may be computed out of an approximation image at scale m, wherein m represents a scale between scale 1 and scale k-1.

The invention provides that enhanced detail pixel values are created by enhancement of the center differences.

The method of the present invention is different from and advantageous over the prior art multi-scale contrast enhancement for the following reason: the prior art algorithms amplify the detail pixel values by applying the conversion functions directly to the detail pixel values by means of look up tables or multiplicative amplification factors.

The present invention is applicable to all the multi-scale detail representation methods from which the original image can be computed by applying the inverse transform.
The invention is applicable to all the multi-scale decomposition methods wherein the detail pixel are equivalent to the sum of translation difference images or can be computed as a center difference image.

According to the present invention the pixel-wise amplification function of at least one scale is adjusted for each detail pixel value according to the ratio between the combination of the enhanced center differences and the combination of the unenhanced center differences.

The detail pixel values are then modified with the adjusted conversion function.

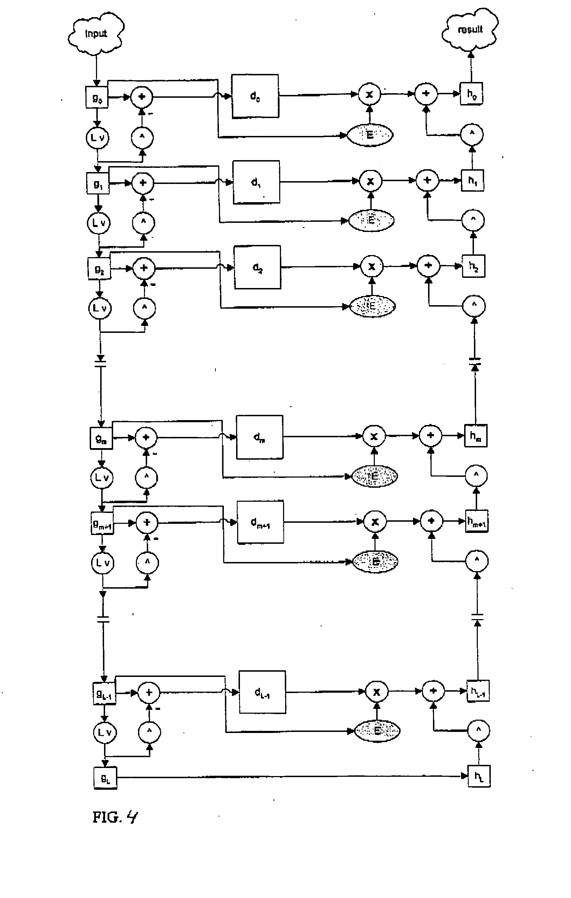

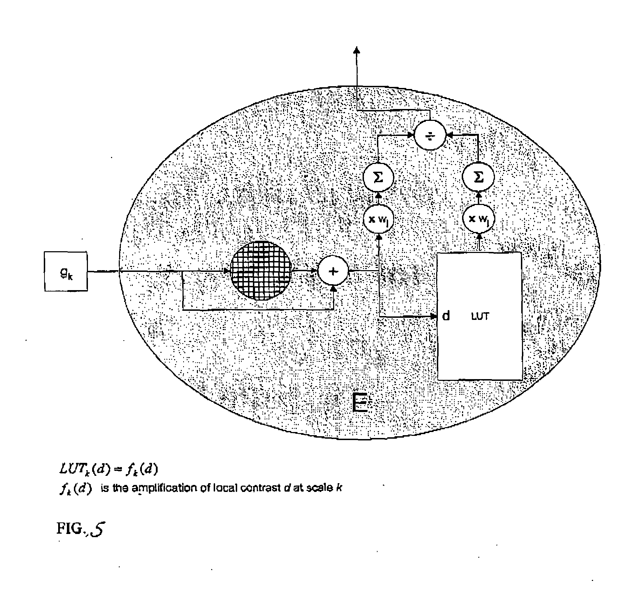

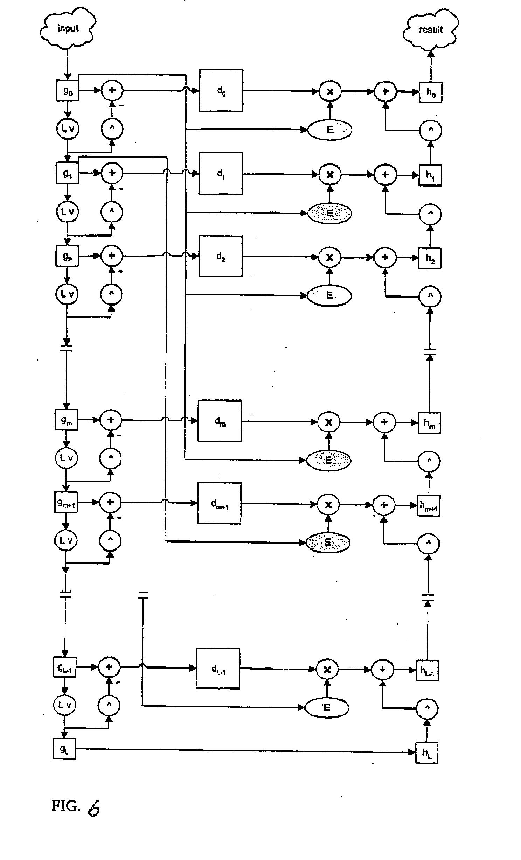

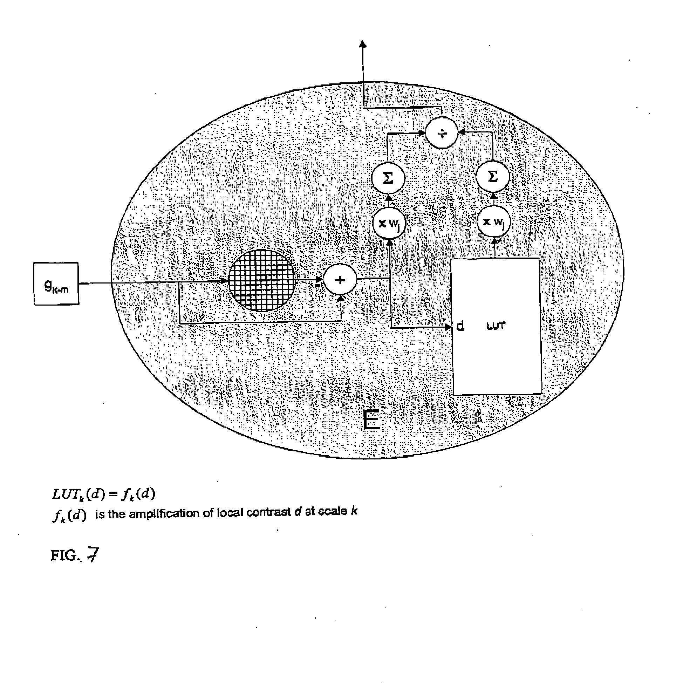

(illustrated in figures 4, 6 with corresponding enhancement steps being illustrated in figures 5, 7 respectively)

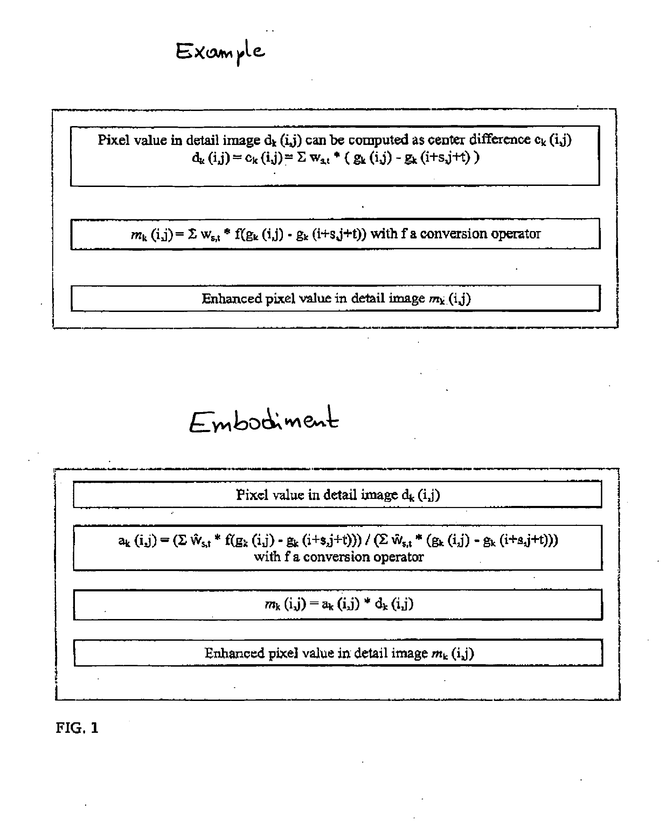

The characteristics of the method of the present invention are shown in the embodiment shown in figure 1. The example shown in figure 1 is not part of the scope of the present invention.

The present invention is generally implemented as a computer program product adapted to carry out the method of any of the claims when run on a computer and is stored on a computer readable medium.

Further advantages and implementations of the embodiment of the present invention will be explained in the following description and will be illustrated by the drawings.

In the context of the present invention specific terms are defined as follows:

Multi-scale decomposition mechanism:

A multi-scale (or multi-resolution) decomposition of an image is a process that computes detail images of said image at multiple scales of a grey value image. A multi-scale decomposition mechanism generally involves filter banks for computing the detail images. Well-known techniques are for example: the Laplacian pyramid, the Burt pyramid, the Laplacian stack, the wavelet decomposition, QMF filter banks.

Approximation image:

An approximation image is a grey value image that represents the original grey value image at the same or a larger scale, or at the same or a lower resolution. An approximation image at a specific scale is equivalent to the original grey value image in which all details at that scale have been omitted (Mallat S.G.,"A Theory for Multiresolution Signal Decomposition: The Wavelet Representation", IEEE Trans. On Pattern Analysis and Machine Intelligence, vol. 11, no. 7, July 1989).

Detail image:

A detail image is defined as the difference of information between an approximation image at a certain scale and an approximation image at a smaller scale.

Conversion operator:

A conversion operator is operator which generates the pixel-wise modification of the detail pixel values as an intermediate step to create a contrast enhanced version of the grey value image. Such an operator has been described in European patent EP 527 525. The modification is defined by a conversion function and can e.g. be implemented as a look up table or as a multiplicative amplification.

Translation difference image:

The translation difference images at a scale s are a measurement of elementary contrast in each pixel of an approximation image at scale s. They can be computed by taking the difference of the approximation image at that scale s and a translated version. The difference of the approximation images can represent other computations of elementary contrast, e.g. the ratio of a pixel with a neighbouring pixel in case the processing steps are preceded by an exponential transform and followed by a logarithmic transform.

Center difference image:

A center difference image is computed by applying a combining operator (for example the summation) to translation difference images.

The combining operator can be a linear or non-linear function of corresponding pixel values in the translation difference images.

An example of a linear combining function is the weighted sum. An example of a non-linear combining function is the median.

BRIEF DESCRIPTION OF THE DRAWINGS

Fig. 1 schematically illustrates the steps of an embodiment of the present invention, and of an example not forming part of the invention,

Fig. 2 illustrates a multi-resolution image processing method according to the prior art,

Fig. 3 illustrates the image enhancement step of the multi-resolution image processing method illustrated in figure 2,

Fig. 4, 6 illustrate different implementations of the multi-resolution image processing method according to the present invention,

Fig. 5 illustrates the image enhancement step of the multi-resolution image processing method illustrated in figure 4,

Fig. 7 illustrates the image enhancement step of the multi-resolution image processing method illustrated in figure 6,

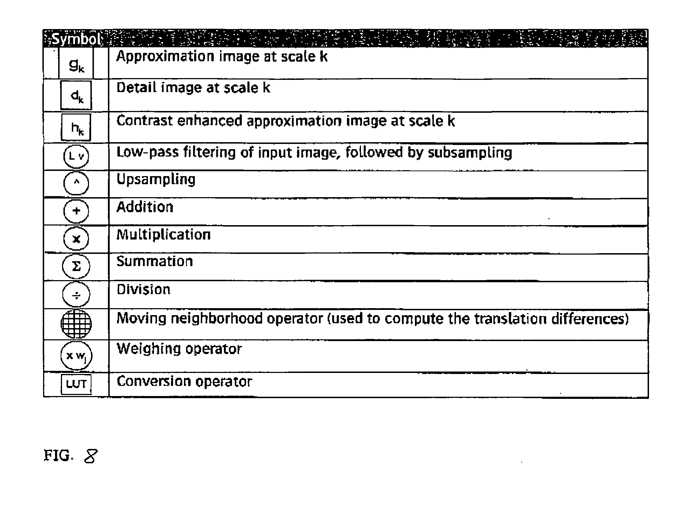

Fig. 8 is a legend pertaining to the symbols used in the above figures.

## DETAILED DESCRIPTION OF THE INVENTION

This contrast enhancement algorithm is applicable to all multi-scale detail representation methods from which the original image can be computed by applying the inverse transformation.

It is applicable to the reversible multi-scale detail representation that can be computed as a weighted sum of translation difference images.

The weighing factors and the translation offsets of the translation difference images can be deducted from the multi-scale decomposition in such a way that the resulting weighted sum of the translation difference images is either identical or an approximation of the detail pixel values.

For these multi-scale detail representations the contrast can be enhanced by applying the conversion operator to the center differences before the weighted sum is computed.

To compute the weighted sum of translation difference images, the approximation image at the same scale (or resolution level) or the approximation images at the smaller scales (or finer resolution levels) can be used.

State-of-the-art multi-scale contrast enhancement algorithms decompose an image into a multi-scale representation comprising detail images representing detail at multiple scales and a residual image.

Some of the important multi-scale decompositions are the wavelet decomposition, the Laplacian-of-Gaussians (or LoG decomposition), the Difference-of-Gaussians (or DoG) decomposition and the Burt pyramid.

The wavelet decomposition is computed by applying a cascade of high-pass and low-pass filters followed by a subsampling step.

The high-pass filter extracts the detail information out of an approximation image at a specific scale.

In the Burt pyramid decomposition the detail information is extracted out of an approximation image at scale $k$ by subtracting the upsampled version of the approximation image at scale $k+1$.

In a state of the art methods as the one disclosed in EP 527 525 a contrast enhanced version of the image is created by conversion of the pixel values in the detail images followed by multi-scale reconstruction.

All above implementations of multiscale decomposition have a common property. Each pixel value in the detail images can be computed out of an approximation image by combining the pixel values in a moving neighborhood.

In the above cases the combining function is a weighted sum.

For the wavelet decomposition the pixel values in the detail image at scale $k$ are computed as:

$$d_{k+1} = \downarrow ( h_d * g_k )$$

$$g_{k+1} = \downarrow ( l_d * g_k )$$

with $h_d$ a high-pass filter, $l_d$ a low-pass filter, * the convolution operator and $\downarrow$ the subsampling operator (i.e. leaving out every second row and column).

For the wavelet reconstruction the enhanced approximation image at scale $k$ is computed as:

$$h_k = l_r * ( \uparrow h_{k+1} ) + h_r * ( \uparrow f ( d_{k+1} ) )$$

with $h_r$ a high-pass filter, $l_r$ a low-pass filter and $\uparrow$ the upsampling operator (i.e. inserting pixels with value 0 in between any two rows and columns).

For the Burt decomposition the pixel values in the detail image at scale $k$ are computed as:

$$d_k \;=\; g_k \;-\; 4g \;*\; (\uparrow g_{k+1})$$

or

$$d_k \;=\; g_k \;-\; 4g \;*\; (\uparrow (\downarrow (g * g_k)))$$

or

$$d_k \;=\; (1 \;-\; 4g \;*\; (\uparrow (\downarrow g))) \;*\; g_k$$

with $g$ a Gaussian low-pass filter and $1$ the identity operator.

For the Burt reconstruction the enhanced approximation image at scale $k$ is computed as:

$$h_k \;=\; 4g \;*\; (\uparrow h_{k+1}) \;+\; f(d_k)$$

with f( x) the conversion operator.

### The multi-scale detail pixel values as weighted sums

Suppose that in the Burt multi-scale decomposition a 5x5 Gaussian filter is used with coefficients $w_{k,1}$ with k = -2,...2 and 1 = -2,...,2, the subsampling operator removes every second row and column and the upsampling operator inserts pixels with value 0 in between any two rows and columns.

The pixel at position $i,j$ in the approximation image $g_{k+1}$ is computed as:

$$g_{k+1}(i,j) = \sum_{s=-2}^{2}\sum_{t=-2}^{2} w_{s,t} g_k(2i+s, 2j+t)$$

The pixel at position $i,j$ in the upsampled image $u_k$ is computed as:

$$u_k(i,j) = \begin{cases} \displaystyle\sum_{s=-2}^{2}\sum_{t=-2}^{2} w_{s,t} g_k(i+s, j+t) & \text{if } i \text{ and } j \text{ are even} \\ 0 & \text{otherwise} \end{cases}$$

The pixel at position $i,j$ in the upsampled, smoothed image $gu_k$ is computed as:

$$gu_k(i,j) = \begin{cases} \sum\limits_{m=\{-2,0,2\}} \sum\limits_{n=\{-2,0,2\}} w_{m,n} \sum\limits_{s=-2}^{2}\sum\limits_{t=-2}^{2} w_{s,t}\, g_k(i+s+m,j+t+n) & \text{if } i \text{ and } j \text{ are even} \\[2ex] \sum\limits_{m=\{-1,1\}} \sum\limits_{n=\{-2,0,2\}} w_{m,n} \sum\limits_{s=-2}^{2}\sum\limits_{t=-2}^{2} w_{s,t}\, g_k(i+s+m,j+t+n) & \text{if } i \text{ is odd and } j \text{ is even} \\[2ex] \sum\limits_{m=\{-2,0,2\}} \sum\limits_{n=\{-1,1\}} w_{m,n} \sum\limits_{s=-2}^{2}\sum\limits_{t=-2}^{2} w_{s,t}\, g_k(i+s+m,j+t+n) & \text{if } i \text{ is even and } j \text{ is odd} \\[2ex] \sum\limits_{m=\{-1,1\}} \sum\limits_{n=\{-1,1\}} w_{m,n} \sum\limits_{s=-2}^{2}\sum\limits_{t=-2}^{2} w_{s,t}\, g_k(i+s+m,j+t+n) & \text{if } i \text{ and } j \text{ are odd} \end{cases}$$

Finally, the pixel at position $i,j$ in the detail image $d_k$ is computed as:

$$d_k(i,j) = \begin{cases} g_k(i,j) - 4 \sum\limits_{m=\{-2,0,2\}} \sum\limits_{n=\{-2,0,2\}} w_{m,n} \sum\limits_{s=-2}^{2}\sum\limits_{t=-2}^{2} w_{s,t}\, g_k(i+s+m,j+t+n) & \text{if } i \text{ and } j \text{ are even} \\[2ex] g_k(i,j) - 4 \sum\limits_{m=\{-1,1\}} \sum\limits_{n=\{-2,0,2\}} w_{m,n} \sum\limits_{s=-2}^{2}\sum\limits_{t=-2}^{2} w_{s,t}\, g_k(i+s+m,j+t+n) & \text{if } i \text{ is odd and } j \text{ is even} \\[2ex] g_k(i,j) - 4 \sum\limits_{m=\{-2,0,2\}} \sum\limits_{n=\{-1,1\}} w_{m,n} \sum\limits_{s=-2}^{2}\sum\limits_{t=-2}^{2} w_{s,t}\, g_k(i+s+m,j+t+n) & \text{if } i \text{ is even and } j \text{ is odd} \\[2ex] g_k(i,j) - 4 \sum\limits_{m=\{-1,1\}} \sum\limits_{n=\{-1,1\}} w_{m,n} \sum\limits_{s=-2}^{2}\sum\limits_{t=-2}^{2} w_{s,t}\, g_k(i+s+m,j+t+n) & \text{if } i \text{ and } j \text{ are odd} \end{cases}$$

Generally, the pixel at position $i,j$ in the detail image $d_k$ can be computed as a weighted sum of pixels in the approximation image at the same or smaller scale $k, k-1, k-2,...$ :

$$d_k(i,j) = g_l(ri,rj) - \sum_m \sum_n v_{m,n}\, g_l(ri+m, rj+n)$$

with $1 \in \{0,..,k\}$ and $r = subsampling\_factor^{(1-k)}$

Because

$$\sum_m \sum_n v_{m,n} = 1$$

the pixel at position $i,j$ in the detail image $d_k$ can be computed as:

$$d_k(i,j) = g_l(ri,rj) - \sum_m \sum_n v_{m,n}\, g_l(ri+m, rj+n)$$

$$d_k(i,j) = \sum_m \sum_n v_{m,n}\, g_l(ri,rj) - \sum_m \sum_n v_{m,n}\, g_l(ri+m, rj+n)$$

$$d_k(i,j) = c_k(i,j) = \sum_m \sum_n v_{m,n}\left(g_l(ri,rj) - g_l(ri+m, rj+n)\right)$$

The term $g_l(ri,rj)-g_l(ri+m,rj+n)$ is called a translation difference.

It expresses the difference in pixel value between a central pixel and a neighboring pixel in an approximation image. It is a measure of local contrast.

The weighted sum of the translation differences is called a centre difference $c_k (i, j)$.

In a similar way it can be proven that the detail images in other multi-scale decomposition methods can also be represented as a combination of translation difference images.

### The conversion operation

In state-of-the-art methods like the one disclosed in EP 527 525 contrast enhancement is obtained by applying a conversion operator $f(x)$ to the detail image $d_k$ or, equivalently:

$$ f\big(d_k(i,j)\big) = f\left( g_l(ri, rj) - \sum_m \sum_n v_{m,n} g_l(ri + m, rj + n) \right) $$

An example of such a conversion operator is the sigmoid function. Another example of such conversion operator is the contrast enhancement function like the one disclosed in EP 525 527. The shape of the conversion operator depends on the specific requirements of the enhancement which is intended to amplify the low-value detail pixel more than the high-value detail pixels.

The conversion step may cause deformations of the shape of the edge transitions in the reconstructed, contrast enhanced image. The reason is the non-linearity of the conversion function.

Generally, the following applies to non-linear functions:

$$ f(x + y) \neq f(x) + f(y) $$

or

$$ f\left( \sum_i x_i \right) \neq \sum_i f(x_i) $$

State-of-the-art algorithms first compute the pixel values in the detail image $d_k$ as weighted sums and apply the conversion step afterwards.

By rewriting the pixel values in the detail image $d_k$ as a weighted sum of translation differences, it is possible to apply the conversion step before the summation instead of afterwards.

Contrast enhancement is now obtained by applying the conversion step to the translation differences:

$$ f\big(d_k(i,j)\big) = \sum_m \sum_n v_{m,n} f\big( g_l(ri, rj) - g_l(ri + m, rj + n) \big) $$

In this way the shape of the edge transitions is better preserved in the contrast enhanced, reconstructed image.

If for every scale $k$ the detail image at that scale is computed out of the full resolution image $g_0$, and enhancement is applied to the center differences, then the shapes of the edge transitions are best preserved after reconstruction.

In the present invention, the center differences (i.e. the weighted sum of the translation differences) only approximate the pixel values in the detail image as would be generated by a multi-scale decomposition.

For example, in case of a 5x5 Gaussian filter in the Burt decomposition and given the fact that the approximation image at the same scale as the detail image is used, 9x9 = 81 translation difference images and 9x9 = 81 weights need to be computed according to the first embodiment.

By using an approximating summation of e.g. 7x7 = 49 terms instead, only 49 translation difference images and 49 weights have to be computed.

The number of terms used in the summation generates a trade-off between the speed of the multi-scale decomposition/ reconstruction and the degree of preservation of the shape of the edge transitions after contrast enhancement.

The first step is to compute the multi-scale decomposition in the conventional way, resulting in a multi-scale representation of detail images $d_k$.

The next step is to compute for each detail image $d_k$ an image of amplification coefficients $a_k$, based on the center difference images computed out of an approximation image at scale $1 \in \{0,..,k\}$. The number of translation difference images and the corresponding translations depends on the number of terms used in the approximating summation.

To obtain contrast enhancement, the translation images are converted.

The amplification coefficients image $a_k$ are computed as the ratio of the weighted sum of the enhanced translation difference images and the weighted sum of the unenhanced translation difference images.

For the amplification coefficient at scale $k$ at position $i,j$ following formula is applied:

$$a_k(i,j) = \frac{\sum_{\tilde{m}}\sum_{\tilde{n}} \tilde{v}_{\tilde{m},\tilde{n}}\, f\big(g_l(ri,rj) - g_l(ri + \tilde{m}, rj + \tilde{n})\big)}{\sum_{\tilde{m}}\sum_{\tilde{n}} \tilde{v}_{\tilde{m},\tilde{n}}\big(g_l(ri,rj) - g_l(ri + \tilde{m}, rj + \tilde{n})\big)}$$

The detail images $d_k$ are enhanced by multiplication of $d_k$ by the amplification coefficients $a_k$.

The set of amplification coefficients is called amplification image.

The reconstructed, contrast enhanced version of the image is computed by applying the multi-scale reconstruction to the enhanced detail images.

Remark: If the conversion function $f(x)$ is the identity function, all the amplification factors will be equal to 1. This results in a reversible multi-scale decomposition/reconstruction.

**Claims**

1. A computer-implemented method for enhancing the contrast of an image that is represented by a digital signal wherein

   a. said digital signal is decomposed into a multi-scale representation comprising at least two detail images representing detail at multiple scales and approximation images of which the detail images are derived, an approximation image at a scale representing the grey values of said image in which all details at that scale have been omitted,
   b. translation difference images are computed of at least one approximation image by pixel-wise subtracting the values of an approximation image and the values of translated versions of said approximation image,
   c. the values of said translation difference images are non- linearly modified,
   d. an amplification image is computed at at least one scale as the ratio of 2 images wherein the first image is computed by combining said modified translation difference images at the same or smaller scale and the second image is created by combining un-enhanced translation difference images at the same or smaller scale, said combined un-enhanced translation difference images approximating said detail images but being different from said detail images,
   e. an enhanced multi-scale detail representation is computed by modifying at at least one scale the detail image according to the amplification image at that scale,
   f. an enhanced image representation is computed by applying a reconstruction algorithm inverting the decomposition into a multi-scale representation to the enhanced multi-scale detail representation.

2. A method according to claim 1 wherein a translation difference image at a specific scale is computed out of an approximation image at the same scale.

3. A method according to claim 1 modified in that all of said translation difference images are computed out of the original image.

4. A method according to claim 1 wherein a translation image at a scale k is computed out of an approximation image at scale m, wherein m represents a scale between scale 1 and scale k-1.

5. A method according to claim 1 wherein the center difference images are identical to the multi-scale detail images or a close approximation of the multi-scale detail images.

6. A method according to any of the preceding claims wherein said image is a mammographic image.

7. A method according to any of the preceding claims wherein said image is a CT image.

8. A computer program product comprising instructions adapted to carry out each of the steps of the method of any of the preceding claims when run on a computer.

9. A computer readable medium comprising computer executable program code adapted to carry out each of the steps of the method of any of claims 1-7 when run on a computer.

**Patentansprüche**

1. Ein durch die nachstehenden Schritte gekennzeichnetes computerimplementiertes Verfahren zur Verstärkung des Kontrasts eines durch ein digitales Signal dargestellten Bildes :

   a. Zerlegung des digitalen Signals in eine Multiskalendarstellung, die zumindest zwei Detailbilder, die Details bei mehreren Skalen darstellen, und Näherungsbilder, von denen die Detailbilder abgeleitet sind, umfasst, wobei ein Näherungsbild bei einer bestimmten Skala die Grauwerte des Bildes, in dem alle Details bei dieser Skala weggelassen sind, darstellt,
   b. Berechnung von Translationsdifferenzenbildern von zumindest einem Näherungsbild durch pixelweises Subtrahieren der Werte eines Näherungsbildes und der Werte translatierter Versionen des Näherungsbildes,
   c. nichtlineare Modifizierung der Werte der Translationsdifferenzenbilder,
   d. Berechnung eines verstärkten Bildes bei zumindest einer Skala als das Verhältnis von 2 Bildern, wobei das erste Bild durch Kombinieren der modifizierten Translationsdifferenzenbilder bei der gleichen oder einer kleineren Skala berechnet und das zweite Bild durch Kombinieren nicht-verstärkter Translationsdifferenzenbilder bei der gleichen oder einer kleineren Skala erstellt wird, wobei sich die kombinierten nicht-verstärkten Translationsdifferenzenbilder den Detailbildern zwar nähern, jedoch zu den Detailbildern unterschiedlich sind,
   e. Berechnung einer verstärkten Multiskalen-Detaildarstellung, indem das Detailbild bei zumindest einer Skala dem verstärkten Bild bei dieser Skala entsprechend modifiziert wird, und
   f. Berechnung einer verstärkten Bilddarstellung durch Anwendung eines die Zerlegung in eine Multiskalendarstellung umkehrenden Rekonstruktionsalgorithmus auf die verstärkte Multiskalen-Detaildarstellung.

2. Verfahren nach Anspruch 1, **dadurch gekennzeichnet, dass** ein Translationsdifferenzenbild bei einer vorgegebenen Skala aus einem Näherungsbild bei der gleichen Skala berechnet wird.

3. Verfahren nach Anspruch 1, das so modifiziert ist, dass alle Translationsdifferenzenbilder aus dem Originalbild berechnet werden.

4. Verfahren nach Anspruch 1, **dadurch gekennzeichnet, dass** ein Translationsbild bei einer Skala k aus einem Näherungsbild bei einer Skala m berechnet wird, wobei m eine Skala zwischen Skala 1 und Skala k-1 bedeutet.

5. Verfahren nach Anspruch 1, **dadurch gekennzeichnet, dass** die Zentraldifferenzenbilder den Multiskalen-Detailbildern oder einer nahen Näherung der Multiskalen-Detailbilder gleich sind.

6. Verfahren nach einem der vorstehenden Ansprüche, **dadurch gekennzeichnet, dass** das Bild ein Mammografiebild ist.

7. Verfahren nach einem der vorstehenden Ansprüche, **dadurch gekennzeichnet, dass** das Bild ein CT-Bild ist.

8. Ein Computerprogrammprodukt, das Anweisungen umfasst, die bei Verwendung auf einem Computer die Ausführung jedes der Schritte des Verfahrens nach einem der vorstehenden Ansprüche sichern.

9. Ein computerlesbares Medium, enthaltend einen auf einem Computer ausführbaren Programmcode, der bei Verwendung auf einem Computer die Ausführung jedes der Schritte des Verfahrens nach einem der Ansprüche 1 bis 7 sichert.

**Revendications**

1. Un procédé implémenté par ordinateur, servant au rehaussement du contraste d'une image représentée par un signal numérique, ledit procédé comprenant les étapes ci-après :

    a. la décomposition du signal numérique en une représentation multi-échelles comprenant au moins deux images détaillées représentant des détails à des échelles multiples, et des images d'approximation dont les images détaillées ont été dérivées, une image d'approximation à une échelle prédéfinie représentant les niveaux de gris de l'image dans laquelle sont omis tous les détails à ladite échelle,
    b. le calcul d'images de différences de translation d'au moins une image d'approximation et ce en soustrayant, pixel par pixel, les valeurs d'une image d'approximation et les valeurs de versions translatées de l'image d'approximation,
    c. la modification non linéaire des valeurs des images de différences de translation,
    d. le calcul d'une image à contraste rehaussé à au moins une échelle comme étant le rapport de 2 images, la première image étant calculée en combinant les images de différences de translation modifiées à la même échelle ou à une échelle plus petite et la deuxième image étant créée en combinant des images de différences de translation à contraste non rehaussé à la même échelle ou à une échelle plus petite, la combinaison des images de différences de translation à contraste non rehaussé s'approchant des images détaillées, sans toutefois être identique à celles-ci,
    e. le calcul d'une représentation de détails multi-échelles en modifiant à au moins une échelle l'image détaillée et ce conformément à l'image à contraste rehaussé à la même échelle, et
    f. le calcul d'une représentation d'image à contraste rehaussé en appliquant un algorithme de reconstruction inversant la décomposition en une représentation multi-échelles, à la représentation de détails multi-échelles à contraste rehaussé.

2. Procédé selon la revendication 1, **caractérisé en ce qu'**une image de différences de translation à une échelle prédéfinie est calculée à partir d'une image d'approximation à la même échelle.

3. Procédé selon la revendication 1, modifié de façon à ce que toutes les images de différences de translation soient calculées à partir de l'image originale.

4. Procédé selon la revendication 1, **caractérisé en ce qu'**une image de translation à une échelle k est calculée à partir d'une image d'approximation à une échelle m, où m représente une échelle comprise entre l'échelle 1 et l'échelle k-1.

5. Procédé selon la revendication 1, **caractérisé en ce que** les images de différences centrales sont identiques aux images détaillées à échelles multiples ou à une approximation proche des images détaillées à échelles multiples.

6. Procédé selon l'une quelconque des revendications précédentes, **caractérisé en ce que** l'image est une image mammographique.

7. Procédé selon l'une quelconque des revendications précédentes, **caractérisé en ce que** l'image est une image CT.

8. Un produit de programme informatique comprenant des instructions qui, lorsqu'elles sont appliquées sur un ordinateur, assurent l'exécution de chacune des étapes du procédé selon l'une quelconque des revendications précédentes.

9. Un support lisible par ordinateur, comprenant un code de programme exécutable sur ordinateur qui, lorsqu'il est exécuté sur un ordinateur, assure l'exécution de chacune des étapes du procédé selon l'une quelconque des revendications 1 à 7.

Example

Pixel value in detail image $d_k$ (i,j) can be computed as center difference $c_k$ (i,j)

$$d_k (i,j) = c_k (i,j) = \Sigma\, w_{s,t} * (\, g_k (i,j) - g_k (i+s,j+t)\,)$$

$$m_k (i,j) = \Sigma\, w_{s,t} * f(g_k (i,j) - g_k (i+s,j+t))\ \text{with f a conversion operator}$$

Enhanced pixel value in detail image $m_k$ (i,j)

Embodiment

Pixel value in detail image $d_k$ (i,j)

$$a_k (i,j) = (\Sigma\, \hat{w}_{s,t} * f(g_k (i,j) - g_k (i+s,j+t))) / (\Sigma\, \hat{w}_{s,t} * (g_k (i,j) - g_k (i+s,j+t)))$$
with f a conversion operator

$$m_k (i,j) = a_k (i,j) * d_k (i,j)$$

Enhanced pixel value in detail image $m_k$ (i,j)

FIG. 1

FIG. 2

$$LUT_k(d) = f_k(d)$$

$f_k(d)$ is the amplification of local contrast $d$ at scale $k$

FIG. 3

FIG. 4

$LUT_k(d) = f_k(d)$

$f_k(d)$ is the amplification of local contrast $d$ at scale $k$

FIG. 5

FIG. 6

$$LUT_k(d) = f_k(d)$$

$f_k(d)$ is the amplification of local contrast $d$ at scale $k$

FIG. 7

| Symbol | |
|---|---|
| $g_k$ | Approximation image at scale k |
| $d_k$ | Detail image at scale k |
| $h_k$ | Contrast enhanced approximation image at scale k |
| (L v) | Low-pass filtering of input image, followed by subsampling |
| (∧) | Upsampling |
| (+) | Addition |
| (x) | Multiplication |
| (Σ) | Summation |
| (÷) | Division |
| ⊕ | Moving neighborhood operator (used to compute the translation differences) |
| (x w) | Weighing operator |
| LUT | Conversion operator |

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6731790 B1
- US 6788826 B
- EP 527525 A
- EP 525527 A

**Non-patent literature cited in the description**

- **MALLAT S.G.** A Theory for Multiresolution Signal Decomposition: The Wavelet Representation. *IEEE Trans. On Pattern Analysis and Machine Intelligence,* July 1989, vol. 11 (7